(19) Europäisches Patentamt / European Patent Office / Office européen des brevets

(11) **EP 3 225 006 B1**

(12) **FASCICULE DE BREVET EUROPEEN**

(45) Date de publication et mention de la délivrance du brevet:
**30.10.2019   Bulletin 2019/44**

(21) Numéro de dépôt: **15771685.3**

(22) Date de dépôt: **11.09.2015**

(51) Int Cl.:
***H04L 29/06*** *(2006.01)*

(86) Numéro de dépôt international:
**PCT/FR2015/052431**

(87) Numéro de publication internationale:
**WO 2016/046466 (31.03.2016 Gazette 2016/13)**

(54) **PROCÉDÉ DE NÉGOCIATION DE CODECS DANS LES RÉSEAUX IP**

VERFAHREN ZUR AUSHANDLUNG VON CODECS IN IP-NETZWERKEN

METHOD FOR NEGOTIATING CODECS IN IP NETWORKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2014  FR 1459074**

(43) Date de publication de la demande:
**04.10.2017   Bulletin 2017/40**

(73) Titulaire: **Orange**
**75015 Paris (FR)**

(72) Inventeurs:
  • **TAMAGNAN, Philippe**
    **F-91400 Orsay (FR)**
  • **CHATRAS, Bruno**
    **F-75012 Paris (FR)**

(56) Documents cités:
**WO-A1-2008/083470     WO-A2-2007/035572**
**US-A1- 2012 044 931**

**Description**

La présente invention concerne les réseaux de type IP (« *Internet Protocol* ») qui sont aptes à mettre en œuvre des protocoles de contrôle de session évolués pour l'établissement d'un ou plusieurs flux média entre des utilisateurs.

Plus particulièrement, la présente invention concerne le « codage » des flux média. Le codage des flux média permet de les acheminer avec un degré plus ou moins élevé de « compression » ; on rappelle que la compression de données est l'opération informatique consistant, en utilisant un algorithme adéquat, à transformer une suite de bits d'origine en une suite de bits plus courte apte, suite à une opération inverse appelée « décompression », à restituer la suite de bits d'origine avec peu de pertes, voire sans perte aucune. Les terminaux utilisent des codeurs-décodeurs, ou « codecs », qui mettent en œuvre des algorithmes de « COdage/DECodage» des données média transmises ou reçues. Parmi les codecs usuels, on peut citer notamment des codecs audio (par exemple G. 711, G. 723.1 et G. 729) et des codecs vidéo (par exemple H. 261 et H. 263). En fonction de sa puissance de calcul, et des circonstances de son utilisation, un terminal donné ne sera en général capable de mettre en œuvre qu'un certain sous-ensemble des codecs existants.

On rappelle également que les réseaux IP permettent la diffusion de données conversationnelles, tels que « Voix sur IP », « Partage de Contenu », « Présence », ou « Messagerie Instantanée ». Dans ces réseaux, les services de communication peuvent identifier des ressources physiques ou virtuelles au moyen de chaînes de caractères, par exemple des « URI » (initiales des mots anglais « *Uniform Resource Identifier* » signifiant « Identifiant Uniforme de Ressource »). La syntaxe des URI est définie dans le document RFC 3986 de l'IETF (Internet Engineering Task Force) ; la connaissance de l'URI d'une ressource permet d'obtenir l'adresse IP d'un équipement du réseau de l'opérateur gérant cette ressource, ou d'un équipement connecté à ce réseau.

Ces équipements peuvent par exemple être un terminal fixe ou mobile, ou une passerelle domestique ou située dans une entreprise (« *Residential Gateway* » en anglais), ou encore une passerelle d'opérateur réseau (« *Voice Gateway* » en anglais), qui raccorde généralement un grand nombre de lignes analogiques ou RNIS, telle qu'un DSLAM-SIP (DSLAM sont les initiales des mots anglais « *Digital Subscriber Line Access Multiplexer* » signifiant « multiplexeur d'accès de lignes d'abonnés numériques » ; il s'agit d'un dispositif collectant le trafic de données DSL qui transite sur un certain nombre de lignes téléphoniques). Par souci de brièveté, on utilisera fréquemment ci-dessous le terme générique de « terminal d'utilisateur », ou de « terminal » tout court, pour désigner ces divers équipements.

Les protocoles de contrôle de session évolués classiques, tels que les protocoles H.323 et SIP/SDP, utilisent des messages dits « de signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière. Lorsqu'un client enregistré sur un réseau utilisant un protocole de contrôle de session évolué souhaite bénéficier d'un service multimédia offert par le réseau, il émet vers le réseau un message de signalisation précisant sa requête.

Le sigle H.323 (cf. l'encyclopédie en ligne « Wikipédia ») regroupe un ensemble de protocoles de communication de la voix, de l'image et de données sur IP. Ces protocoles ont été mis au point par l'ITU-T, qui est la division de l'ITU (International Telecommunication Union) chargée de définir des normes dans le domaine des télécommunications. Ces protocoles peuvent être regroupés en trois catégories : la signalisation, le transport de l'information, et la négociation de codecs.

Le protocole SIP (initiales des mots anglais « Session Initiation Protocol » signifiant « Protocole d'Initialisation de Session ») a été défini par l'IETF dans le document RFC 3261. Ce protocole permet l'établissement, la modification et la terminaison de sessions multimédia dans un réseau utilisant le protocole IP. Les ressources de communication y sont identifiées par des « SIP-URI », telles que définies dans le document RFC 3261, ou par des « tel-URI », telles que définies dans le document RFC 3966 de l'IETF ; une SIP-URI est de la forme « user@host » (par exemple, alice@domaine1), où la partie « host » identifie le réseau sur lequel la ressource (par exemple, l'utilisateur d'un service offert par le réseau) représentée par la partie « user » possède un compte ; une tel-URI est de la forme « tel:numéro_de_téléphone » (par exemple, tel:+336123456789).

Ce protocole SIP est utilisé notamment dans les infrastructures de type IMS (initiales des mots anglais « *IP Multimedia Subsystem* » signifiant « Sous-système Multimédia sur IP »). L'IMS a été défini par l'organisme de normalisation 3GPP (« *3rd Generation Partnership Project* »). C'est une architecture de réseau introduite initialement pour les réseaux mobiles, puis étendue à d'autres accès, dont les accès fixes à technologie xDSL. Cette architecture permet l'établissement dynamique et le contrôle de sessions multimédia entre deux clients, ainsi que la réservation de ressources au niveau du réseau de transport des flux multimédias. Grâce à cette architecture, les opérateurs réseau peuvent commodément mettre en œuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Les normes relatives à l'établissement des appels et l'utilisation des codecs dans les réseaux IMS sont définies dans les spécifications TS 23.228, TS 24.229 et TS 26.114 du 3GPP.

Le protocole SDP (initiales des mots anglais « Session Description Protocol » signifiant « Protocole de Description de Session »), qui est défini dans le document RFC 4566 de l'IETF et mis en œuvre dans les messages SIP, est utilisé pour la négociation de codecs. Le document RFC 3264 de l'IETF préconise des modes de réalisation pour cette négociation.

Dans certains systèmes, lorsqu'une demande d'ouverture de session est émise par un terminal, dit terminal appelant, d'un premier réseau, ce terminal émet au moins un message de signalisation contenant des informations sur l'ensemble des codecs qu'il propose pour établir une session multimédia avec un terminal, dit terminal appelé, d'un second réseau (identique ou non au premier réseau) ; plus précisément, le terminal appelant propose un ou plusieurs codecs pour chaque type de flux média envisagé (audio, vidéo, et ainsi de suite). Dans d'autres systèmes, à l'inverse, c'est le terminal appelé qui fait la proposition initiale de codecs. Le document WO2007/035572 A2 décrit des améliorations apportées à un contrôleur de session de périphérie en traitant les messages de signalisation liées au négociation de codecs.

Le document WO2008/083470 A1 décrit un procédé pour transaction de codec assistée.

Classiquement, en préalable à l'établissement d'une communication entre deux terminaux donnés situés dans des domaines IP différents, on met en œuvre un procédé de « description de session », c'est-à-dire de négociation et de sélection de codecs, comprenant les étapes suivantes :

1) l'un de ces deux terminaux, désigné ci-dessous par Ta et appartenant à un domaine/réseau A, émet au moins un message spécifiant une liste de codecs, dite « offre » Oa, que le terminal Ta est techniquement capable d'utiliser pour communiquer avec l'autre terminal, désigné ci-dessous par Tb et appartenant à un domaine/réseau B ;

2) le message est intercepté par un dispositif de transit, désigné ci-dessous par E, entre les deux domaines/réseaux ; ce dispositif de transit E peut par exemple être un SBC (initiales des mots anglais « *Session Border Controler* » signifiant « Gestionnaire de Session en Bordure »), ou, dans le cas des réseaux IMS, un IBCF (initiales des mots anglais « *Interconnection Border Control Function* » signifiant « Fonction de Gestion de Frontière d'Interconnexion ») intervenant dans le plan de signalisation couplé à une TrGW (initiales des mots anglais « Transition Gateway » signifiant « Passerelle de Transit », également appelée « *Border Gateway* », ou BGW, signifiant « Passerelle d'Interconnexion ») intervenant dans le plan média et servant à la traduction d'adresses IP, la protection du plan média et le transcodage ;

3) le dispositif de transit E détermine une liste de codecs, dite « offre retouchée » Ob, à partir, au moins, de l'offre Oa ;

4) le dispositif de transit E envoie l'offre retouchée Ob au terminal Tb;

5) le terminal Tb détermine une liste de codecs, dite « réponse » Rb, comprenant une partie au moins des codecs qui sont, d'une part, compris dans l'offre retouchée Ob, et d'autre part tels que le terminal Tb est techniquement capable de les utiliser ;

6) à partir, au moins, de la réponse Rb, le dispositif de transit E détermine une liste de codecs, dite « réponse retouchée » Ra, en sélectionnant une partie au moins des codecs compris dans l'offre Oa ; et

7) le dispositif de transit E envoie la réponse retouchée Ra au terminal Ta.

Or le choix d'un couple optimal de codecs (l'un pour le terminal Ta et l'autre pour le terminal Tb) se heurte au problème technique suivant : même si, classiquement, le dispositif de transit E « connaît » (par configuration) une liste de codecs utilisés par les types de terminaux du domaine A *dans leur ensemble,* ainsi qu'une liste de codecs utilisables par les types de terminaux du domaine B *dans leur ensemble*, le dispositif de transit E ne connaît pas la liste de codecs utilisables, au moment de l'établissement de la communication, par les terminaux Ta et Tb concernés ; or le nombre de couples de codecs possibles a priori est élevé (jusqu'à plusieurs dizaines).

Pour résoudre ce problème, selon l'art antérieur :

- lors de l'étape 3) ci-dessus, pour construire l'offre retouchée Ob, le dispositif de transit E prend simplement l'offre Oa, et y ajoute, le cas échéant, un ou plusieurs codecs utilisables par les types de terminaux du domaine B qui ne sont capables d'utiliser aucun des codecs compris dans l'offre Oa ; on notera à cet égard que, dans le cas où une communication est établie entre deux terminaux utilisant pour cette communication des codecs différents, le dispositif de transit E (ou un dispositif associé) doit effectuer une sorte de traduction appelée « transcodage » ; et

- lors de l'étape 6) ci-dessus, pour construire la réponse retouchée Ra, le dispositif de transit E sélectionne le premier codec de l'offre Oa identique à un codec compris dans la réponse Rb, s'il existe un tel codec, ou, à défaut, le premier codec de l'offre Oa.

On essaie ainsi, dans les procédés classiques de négociation de codecs, d'éviter les transcodages ; en effet, les transcodages ont pour inconvénient (notamment) de consommer du temps de calcul (CPU) dans le dispositif de transit E (ou le dispositif associé).

Or ces procédés classiques ont pour inconvénient qu'ils ne sont pas aptes à prendre en compte certains critères de Qualité de Service (en anglais, « *Quality of Service* » ou QoS) de la communication, tels que souhaités par au moins un opérateur réseau pour l'ensemble de ses abonnés, ou auxquels au moins un opérateur réseau s'est formellement engagé (« *Service Level Agreement* » en anglais) auprès de l'abonné concerné. Par exemple, un critère de Qualité de Service est la « définition » (c'est-à-dire, la qualité d'image, du son, ou de la vidéo) offerte par les codecs mis en œuvre pour cette communication : en effet, certains codecs, comme le codec G.722 pour les terminaux fixes ou le codec AMR-WB (« *Adaptive Multi Rate-Wide Band* ») pour les terminaux mobiles, offrent une « Haute Définition » (« *High Definition* », ou « HD », en anglais), par comparaison avec des codecs « Basse Définition » (ou « BD »), comme les codecs G.711 ou G.729 pour les terminaux fixes ou le codec AMR (« *Adaptive Multi Rate* ») pour les terminaux mobiles, étant entendu que l'on ne peut avoir une communication HD que si le codec utilisé par le terminal Ta et le codec utilisé par le terminal Tb sont tous deux des codecs HD.

En particulier, un inconvénient des procédés classiques est qu'ils évitent systématiquement tout transcodage lorsque c'est possible, c'est-à-dire lorsqu'il existe un codec commun entre l'offre Oa et la réponse Rb, alors que l'on pourrait améliorer la QoS dans certains cas au moyen d'un transcodage, fût-ce au prix d'une charge accrue du dispositif de transit E.

La présente invention concerne donc un procédé de négociation de codecs, comprenant les étapes suivantes :

1) un terminal, dit premier terminal, appartenant à un premier domaine/réseau IP, émet au moins un message spécifiant, pour un type de flux média donné, une liste de codecs, dite offre Oa, que ledit premier terminal est capable d'utiliser pour communiquer avec un autre terminal, dit second terminal, appartenant à un second domaine/réseau IP,
2) ledit message est intercepté par un dispositif de transit situé sur le chemin de signalisation entre lesdits premier et second domaines/réseaux,
3) le dispositif de transit détermine une liste de codecs, dite offre retouchée Ob, à partir, au moins, de ladite offre Oa,
4) le dispositif de transit envoie ladite offre retouchée Ob audit second terminal,
5) le second terminal détermine une liste de codecs, dite réponse

$$Rb = \{Cb(1), Cb(2), …, Cb(n)\},$$

comprenant $n \geq 1$ codecs qui sont, d'une part, compris dans l'offre retouchée Ob, et d'autre part tels que le second terminal est capable de les utiliser, et envoie ladite réponse Rb au dispositif de transit, et
6) le dispositif de transit détermine, à partir de ladite réponse Rb, une liste de codecs, dite réponse retouchée provisoire R'a.

Ledit procédé est remarquable en ce qu'il comprend une étape préalable au cours de laquelle est configurée une liste de priorité comprenant des triplets constitué chacun de :

- un codec Ca utilisable par un terminal du premier domaine/réseau,
- un codec Cb utilisable par un terminal du second domaine/réseau, et
- un degré de priorité associé à ce couple de codecs (Ca, Cb),

et en ce que ladite réponse retouchée provisoire est

$$R'a = \{Ca(1), Ca(2), …, Ca(n)\},$$

où le codec Ca($i$), où $i$ = 1,2, ... , $n$, est un codec offrant, en association avec le codec Cb($i$) de la réponse Rb, le degré de priorité maximal parmi les codecs de l'offre Oa.

On notera que ledit second domaine/réseau peut être identique ou non audit premier domaine/réseau.

On notera également que la présente invention concerne spécifiquement les *codecs* par opposition aux *pseudo-codecs* (un pseudo-codec, par exemple tel que défini dans la norme RFC 4733 de l'IETF, est un dispositif servant à identifier les signaux de touches téléphoniques et les tonalités émises par les équipements réseau). L'invention est compatible avec tout ajout ou retrait d'un pseudo-codec opéré dans l'une quelconque des listes de codecs mentionnées ci-dessus.

Le dispositif de transit s'assure ainsi que, quel que soit le codec Cb(i) utilisé par le second terminal dans une communication avec le premier terminal, le codec Ca(i) qui sera utilisé par le premier terminal offrira un degré de priorité maximal dans l'ensemble des couples comprenant ce codec Cb(i).

Grâce à ces dispositions, la procédure de sélection de codecs préalable à l'établissement d'une communication entre deux terminaux, mise en œuvre par un dispositif de transit situé sur le chemin de signalisation entre ces deux terminaux, peut respecter un certain critère de priorité choisi par les opérateurs des domaines/réseaux concernés, et en outre anticiper sur la capacité du dispositif de transit à gérer les codecs sélectionnés en termes de traitement ou de calcul.

Selon des caractéristiques particulières, ledit procédé comprend en outre une étape au cours de laquelle le dispositif de transit envoie audit premier terminal une liste de codecs, dite réponse retouchée Ra, comprenant au moins ladite réponse retouchée provisoire R'a, ou le premier codec de ladite réponse retouchée provisoire R'a.

On pourra, par exemple, pour construire la réponse retouchée Ra, ajouter aux codecs de R'a des codecs non compris dans l'offre Oa (comme prévu dans le document RFC 3264 mentionné ci-dessus).

Grâce à ces dispositions, les opérateurs réseau peuvent appliquer l'invention en conformité avec la politique de leur choix concernant le contenu de la réponse retouchée Ra.

Selon d'autres caractéristiques particulières, lors de ladite étape 3), le dispositif de transit met en œuvre les sous-étapes suivantes :

a) détermination, pour chaque codec Ca de l'offre Oa, du, ou des, codec(s) Cb utilisable(s) par un terminal du second domaine/réseau, et détermination du degré de priorité associé au(x) couple(s) formé(s) par ce codec Ca de l'offre Oa et ce, ou ces, codec(s) Cb utilisable(s) par un terminal du second domaine/réseau,

b) détermination, pour chacun des codecs Cb déterminés lors de la sous-étape a), du degré de priorité maximal parmi les degrés de priorité associés déterminés lors de cette sous-étape a), et sélection de ce degré de priorité maximal en association avec ce codec Cb, et

c) formation d'une offre retouchée Ob comprenant les codecs Cb déterminés lors de la sous-étape a), par valeurs décroissantes du degré de priorité associé sélectionné lors de la sous-étape b).

Grâce à ces dispositions, le dispositif de transit favorise la sélection par le premier terminal, aux fins d'une communication avec le second terminal, du codec Ca(i) offrant le degré de priorité maximal parmi les codecs compris dans l'offre Oa.

Corrélativement, l'invention concerne un dispositif de transit situé sur le chemin de signalisation entre un premier domaine/réseau IP et un second domaine/réseau IP. Ledit dispositif de transit est remarquable en ce qu'il comprend des moyens pour :

- intercepter un message émis par un terminal, dit premier terminal, appartenant audit premier domaine/réseau, ledit message spécifiant, pour un type de flux média donné, une liste de codecs, dite offre Oa, que ledit premier terminal propose d'utiliser pour communiquer avec un terminal, dit second terminal, appartenant audit second domaine/réseau,
- déterminer une liste de codecs, dite offre retouchée Ob, à partir, au moins, de ladite offre Oa, et envoyer ladite offre retouchée Ob audit second terminal,
- recevoir de la part du second terminal une liste de codecs, dite réponse

$$Rb = \{Cb(1), Cb(2), \ldots, Cb(n)\},$$

et

- déterminer, à partir de ladite réponse Rb, une liste de codecs, dite réponse retouchée provisoire R'a,

et en ce qu'il comprend en outre des moyens pour :

- prendre en compte une liste de priorité comprenant des triplets constitué chacun de :

  • un codec Ca utilisable par un terminal du premier domaine/réseau,
  • un codec Cb utilisable par un terminal du second domaine/réseau, et
  • un degré de priorité associé à ce couple de codecs (Ca, Cb),

et en ce que ladite réponse retouchée provisoire est

$$R'a = \{Ca(1), Ca(2), \ldots, Ca(n)\},$$

où le codec Ca($i$), où $i = 1,2, ... , n$, est un codec offrant, en association avec le codec Cb($i$) de la réponse Rb, le degré de priorité maximal parmi les codecs de l'offre Oa.

Selon des caractéristiques particulières, ledit dispositif de transit comprend en outre des moyens pour envoyer audit premier terminal une liste de codecs, dite réponse retouchée Ra, comprenant au moins ladite réponse retouchée provisoire R'a, ou le premier codec de ladite réponse retouchée provisoire R'a.

Selon d'autres caractéristiques particulières, ledit dispositif de transit comprend en outre des moyens pour :

- déterminer, pour chaque codec Ca de l'offre Oa, le, ou les, codec(s) Cb utilisable(s) par un terminal du second domaine/réseau, et déterminer le degré de priorité associé au(x) couple(s) formé(s) par ce codec Ca de l'offre Oa et ce, ou ces, codec(s) Cb utilisable(s) par un terminal du second domaine/réseau,
- déterminer, pour chacun des codecs Cb ainsi déterminés, le degré de priorité maximal parmi les degrés de priorité associés ainsi déterminés, et sélectionner ce degré de priorité maximal en association avec ce codec Cb, et
- former une offre retouchée Ob comprenant les codecs Cb ainsi déterminés, par valeurs décroissantes du degré de priorité associé ainsi sélectionné.

Les avantages offerts par ces dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de négociation de codecs succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs.

Considérons donc à titre d'exemple deux domaines (ou réseaux) A et B interconnectés via un dispositif de transit E. L'opérateur du dispositif de transit E le configure sur la base de l'estimation suivante :

- le premier domaine A comporte deux types de terminaux, à savoir :

  • un premier type acceptant le codec G.711, et
  • un deuxième type acceptant les codecs AMR-WB et G.711, et

- le second domaine B comporte cinq types de terminaux, à savoir :

  • un premier type acceptant le codec G.722,
  • un deuxième type acceptant le codec G.711,
  • un troisième type acceptant le codec G.722 et le codec G.711,
  • un quatrième type acceptant le codec G.722 et le codec G.729,
  • un cinquième type acceptant le codec AMR-WB et le codec G.729, et
  • un sixième type acceptant le codec G.729.

Selon l'invention, les opérateurs des domaines A et B définissent ensemble une « liste de priorité », que l'on appellera PL, constituée de triplets comprenant :

- un degré de priorité,
- un codec utilisable par au moins un type de terminal du domaine A, et
- un codec utilisable par au moins un type de terminal du domaine B.

Cette liste de priorité PL est accessible à un dispositif de transit E situé sur le chemin de signalisation entre les domaines A et B.

On va décrire à présent un premier mode de réalisation du procédé de négociation de codecs selon l'invention.

Dans ce mode de réalisation, on suppose que, selon un accord préalable entre les opérateurs des domaines A et B, la priorité est une fonction croissante de la définition (c'est-à-dire de la qualité technique) du flux média. On rappelle à cet égard que les codecs G.722 et AMR-WB sont des codecs haute-définition (HD), alors que les codecs AMR, G.711 et G.729 sont des codecs basse-définition (BD).

Pour tout codec Ca utilisable par au moins un terminal du premier domaine A, et tout codec Cb utilisable par au moins un terminal du second domaine B, on définit une échelle de priorité PS, qui peut par exemple être la suivante :

- degré = 5 si Cb identique à Ca, et HD,
- degré = 4 si Cb différent de Ca, mais tous deux HD,
- degré = 3 si Cb identique à Ca, et BD,
- degré = 2 si Cb différent de Ca, mais tous deux BD, et
- degré = 1 si Cb différent de Ca, avec l'un HD et l'autre BD.

On favorise ainsi les communications haute-définition (large bande) de bout en bout. D'autre part, on évite les transcodages entre un codec haute-définition (large bande) et un codec basse-définition (bande étroite), car on suppose (aux fins du présent exemple, tout au moins) qu'un transcodage HD-BD requiert plus de CPU qu'un transcodage BD-BD.

Dans le présent exemple, compte tenu des codecs effectivement utilisables par au moins un terminal du premier domaine A, et des codecs effectivement utilisables par au moins un terminal du second domaine B, on détermine, conformément à cette échelle de priorité PS, la liste de priorité PL suivante :

| degré de priorité | codec A | codec B |
| --- | --- | --- |
| 5 | AMR-WB | AMR-WB |
| 4 | AMR-WB | G.722 |
| 3 | G.711 | G.711 |
| 2 | G.711 | G.729 |
| 1 | AMR-WB | G.711 |
| 1 | AMR-WB | G.729 |
| 1 | G.711 | G.722 |
| 1 | G.711 | AMR-WB |

Lors d'une étape S1, un terminal Ta appartenant au domaine A émet un message spécifiant l'offre suivante :

$$Oa = \{AMR\text{-}WB, G.711\},$$

dans laquelle l'ordre des codecs exprime les préférences du terminal Ta.

Lors d'une étape S2, ledit message est intercepté par le dispositif de transit E.

Selon l'art antérieur, le dispositif de transit E formerait alors une offre retouchée Ob en ajoutant à la fin de la liste Oa les codecs utilisables par l'ensemble des terminaux du domaine B et non compris dans la liste Oa:

$$Ob = \{AMR\text{-}WB, G.711, G.722, G.729\},$$

et ce, afin de tenir compte, notamment, du fait que le premier et le quatrième types de terminaux du domaine B n'acceptent aucun des codecs (à savoir, AMR-WB et G.711) proposés par le terminal Ta dans son offre Oa. Mais cela provoquerait :

- une communication G .711-G.711, soit BD-BD, entre Ta et un terminal Tb du troisième type, ou
- un transcodage AMR-WB-G.729, soit HD-BD, entre Ta et un terminal Tb du sixième type.

En revanche, dans le présent mode de réalisation, on cherche à favoriser les communications HD-HD, et à éviter les transcodages HD-BD.

Lors d'une étape S3, le dispositif de transit E détermine l'offre retouchée Ob, conformément à la procédure suivante.

La liste Oa est parcourue séquentiellement. Pour chaque codec Ca de Oa, le dispositif de transit E filtre la liste de priorité PL ci-dessus en ne gardant que les triplets contenant Ca en premier terme.

Ainsi, puisque Oa = {AMR-WB, G.711} :
- pour le premier codec (AMR-WB), la sous-liste $PL_1$ obtenue est :

| degré de priorité | codec A | codec B |
|---|---|---|
| 5 | AMR-WB | AMR-WB |
| 4 | AMR-WB | G.722 |
| 1 | AMR-WB | G.711 |
| 1 | AMR-WB | G.729 |

- pour le deuxième codec (G.711), la sous-liste $PL_2$ obtenue est :

| degré de priorité | codec A | codec B |
|---|---|---|
| 3 | G.711 | G.711 |
| 2 | G.711 | G.729 |
| 1 | G.711 | G.722 |
| 1 | G.711 | AMR-WB |

On concatène ensuite les sous-listes $PL_1$ et $PL_2$ :

| degré de priorité | codec A | codec B |
|---|---|---|
| 5 | AMR-WB | AMR-WB |
| 4 | AMR-WB | G.722 |
| 1 | AMR-WB | G.711 |
| 1 | AMR-WB | G.729 |
| 3 | G.711 | G.711 |
| 2 | G.711 | G.729 |
| 1 | G.711 | G.722 |
| 1 | G.711 | AMR-WB |

Puis on élimine la colonne correspondant au codec A :

| degré de priorité | codec B |
|---|---|
| 5 | AMR-WB |
| 4 | G.722 |
| 1 | G.711 |
| 1 | G.729 |
| 3 | G.711 |
| 2 | G.729 |
| 1 | G.722 |
| 1 | AMR-WB |

Enfin, on ne garde, pour chaque codec, que le degré de priorité le plus élevé, et l'on ordonne la liste par priorité décroissante :

| degré de priorité | codec B |
|---|---|
| 5 | AMR-WB |
| 4 | G.722 |
| 3 | G.711 |
| 2 | G.729 |

Le dispositif de transit E obtient ainsi l'offre retouchée Ob = {AMR-WB, G.722, G.711, G.729}.

Lors d'une étape S4, le dispositif de transit E envoie l'offre retouchée Ob au terminal Tb.

Lors d'une étape S5, le terminal Tb détermine une réponse Rb en sélectionnant, dans l'offre retouchée Ob, le ou les codec(s) qu'il accepte. On notera que dans certains systèmes (par exemple, les réseaux IMS), les normes recommandent que la réponse Rb ne contienne qu'un seul codec par type de flux média. Dans le cas où la réponse Rb peut contenir plusieurs codecs, celle-ci respecte de préférence l'ordre des codecs compris dans l'offre retouchée Ob.

Dans le présent mode de réalisation, où l'offre retouchée est

$$Ob = \{AMR\text{-}WB, G.722, G.711, G.729\},$$

et dans le cas où la réponse Rb peut contenir plusieurs codecs, le terminal Tb produit, selon son type, la réponse suivante :

- premier type : Rb = {G.722},
- deuxième type : Rb = {G.711},
- troisième type : Rb = {G.722, G.711},
- quatrième type : Rb = {G.722, G.729},
- cinquième type : Rb = {AMR-WB, G.729}, et
- sixième type : Rb = {G.729}.

Le terminal Tb envoie ensuite la réponse Rb au dispositif de transit E.

Lors d'une étape S6, le dispositif de transit E utilise à nouveau la liste PL pour obtenir une « réponse retouchée provisoire » R'a.

Pour ce faire, le dispositif de transit E parcourt la réponse Rb, et couple chaque codec compris dans la réponse Rb avec un codec compris dans l'offre Oa, et ce, de manière à maximiser le degré de priorité.

Ainsi, selon le type du terminal Tb, le dispositif de transit E obtient :

- premier type : Rb = {G.722}, R'a = {AMR-WB} (priorité maximale 4),
- deuxième type : Rb = {G.711}, R'a = {G.711} (priorité maximale 3),
- troisième type: Rb = {G.722, G.711}, R'a = {AMR-WB, G711} (priorités maximales 4 et 3),
- quatrième type: Rb = {G.722, G729}, R'a = {AMR-WB, G.711} (priorités maximales 4 et 2),
- cinquième type : Rb = {AMR-WB, G.729}, R'a = {AMR-WB, G.711} (priorités maximales 5 et 2), et
- sixième type : Rb = {G.729}, R'a = {G.711} (priorité maximale 2).

On voit, grâce à cet exemple, que la réponse retouchée provisoire R'a peut comprendre plusieurs codecs.

Enfin, lors d'une étape S7, le dispositif de transit E obtient la « réponse retouchée » (définitive) Ra à partir, au moins, de la réponse retouchée provisoire R'a, et envoie cette réponse retouchée Ra au terminal Ta.

Par exemple, selon une première variante, Ra est simplement identique à R'a. Dans cette première variante, le dispositif de transit E obtient, selon le type du terminal Tb :

- premier type : Rb = {G.722}, Ra = {AMR-WB},
- deuxième type : Rb = {G.711}, Ra = {G.711},
- troisième type : Rb = {G.722, G.711}, Ra = {AMR-WB, G.711},
- quatrième type : Rb = {G.722, G729}, Ra = {AMR-WB, G.711},
- cinquième type : Rb = {AMR-WB, G.729}, Ra = {AMR-WB, G.711}, et
- sixième type : Rb = {G.729}, Ra = {G.711}.

Selon une deuxième variante, on filtre R'a de manière à ne garder que son premier codec. Cette variante est particulièrement utile dans le cas où le domaine A n'autorise qu'un seul codec dans Ra. Dans cette deuxième variante, le dispositif de transit E obtient, selon le type du terminal Tb :

- premier type : Rb = {G.722}, Ra = {AMR-WB},
- deuxième type : Rb = {G.711}, Ra = {G.711},
- troisième type : Rb = {G.722, ...}, Ra = {AMR-WB},
- quatrième type : Rb = {G.722, ...}, Ra = {AMR-WB},
- cinquième type : Rb = {AMR-WB, ...}, Ra = {AMR-WB}, et
- sixième type : Rb = {G.729}, Ra = {G.711}.

D'autres variantes sont naturellement possibles.

On rappelle que l'offre initiale de Ta était Oa = {AMR-WB, G.711}. On voit dans l'exemple ci-dessus que, pour un terminal Tb du troisième type, la communication HD-HD est favorisée (AMR-WB transcodé en G.722) par rapport à la communication BD-BD (G.711-G.711) selon l'art antérieur.

Selon un deuxième mode de réalisation de l'invention, on prend également en compte la charge courante (c'est-à-dire, pendant la période où se déroule la négociation de codecs) du dispositif de transit E. On rappelle que la « charge » d'un dispositif représente la fraction active des ressources totales de ce dispositif ; en particulier, la « charge » d'un processeur est la fraction de sa puissance nominale utilisée par le processeur à l'instant considéré.

Dans ce mode de réalisation, on suppose que le dispositif de transit E (ou un système-réseau associé) est capable :

- d'obtenir sa propre charge, et
- de déterminer au sein de quel intervalle, parmi une série prédéterminée d'intervalles (disjoints et tous compris dans l'intervalle [0,1]), cette charge se situe.

On suppose en outre que, selon un accord préalable entre les opérateurs des domaines A et B, on a déterminé une pluralité d'échelles de priorité $PS^1$, $PS^2$, ..., $PS^m$ (au lieu d'une seule), chacune de ces échelles de priorité $PS^c$, où $c$=1, 2, ..., $m$ étant respectivement associée à un $c^{\text{ème}}$ palier de charge, c'est-à-dire à un intervalle respectif $I^c$ de valeurs de la charge du dispositif de transit E. Par exemple, l'intervalle $I^1$ représente une charge faible, l'intervalle $I^2$ une charge moyenne, l'intervalle $I^3$ une charge forte, et l'intervalle $I^4$ une charge très forte. Ces échelles de priorité sont telles que, plus la charge du dispositif de transit E est forte, et plus on essaie d'éviter les transcodages (qui sont gourmands en calculs), en leur affectant un degré de priorité faible. Certains transcodages peuvent même être volontairement proscrits (degré de priorité nul) en cas de très forte charge.

Compte tenu des codecs effectivement utilisables par au moins un terminal du premier domaine A, et des codecs effectivement utilisables par au moins un terminal du second domaine B, on détermine, conformément à ces échelles de priorité respectives $PS^1$, $PS^2$, ..., $PS^m$, des listes de priorité respectives $PL^1$, $PL^2$, ..., $PL^m$.

Par exemple, en situation de forte charge (charge appartenant, disons, à l'intervalle $I^3$), on pourrait avoir l'échelle de priorité $PS^3$ suivante :

- degré = 5 si Cb identique à Ca, et HD,
- degré = 4 si Cb identique à Ca, et tous deux BD,
- degré = 3 si Cb différent de Ca, mais tous deux BD,
- degré = 2 si Cb différent de Ca, mais tous deux HD, et
- degré = 1 si Cb différent de Ca, avec l'un HD et l'autre BD.

On favorise ainsi les communications haute-définition (large bande) de bout en bout, mais on évite les transcodages dès lors qu'ils font intervenir un codec haute-définition (large bande).

Le dispositif de transit E consulte la liste $PL^3$ suivante obéissant à cette échelle de priorité $PS^3$ :

| degré de priorité | codec A | codec B |
|---|---|---|
| 5 | AMR-WB | AMR-WB |
| 4 | G.711 | G.711 |
| 3 | G.711 | G.729 |
| 2 | AMR-WB | G.722 |
| 1 | AMR-WB | G.711 |
| 1 | AMR-WB | G.729 |
| 1 | G.711 | G.722 |
| 1 | G.711 | AMR-WB |

Le présent mode de réalisation débute par des étapes S'1 et S'2 respectivement identiques aux étapes S1 et S2 du premier mode de réalisation.

Mais ensuite, lors d'une étape S'3, le dispositif de transit E produit, en filtrant la liste de priorité $PL^3$ ci-dessus, deux listes $PL^3_1$ et $PL^3_2$ dont la concaténation donne la liste suivante :

| degré de priorité | codec A | codec B |
|---|---|---|
| 5 | AMR-WB | AMR-WB |
| 2 | AMR-WB | G.722 |
| 1 | AMR-WB | G.711 |

(suite)

| degré de priorité | codec A | codec B |
|---|---|---|
| 1 | AMR-WB | G.729 |
| 4 | G.711 | G.711 |
| 3 | G.711 | G.729 |
| 1 | G.711 | G.722 |
| 1 | G.711 | AMR-WB |

Le dispositif de transit E construit alors, après filtrage et ordonnancement, la liste suivante :

| degré de priorité | codec B |
|---|---|
| 5 | AMR-WB |
| 4 | G.711 |
| 3 | G.729 |
| 2 | G.722 |

Autrement dit, dans le présent mode de réalisation, l'offre retouchée est : Ob = {AMR-WB, G.711, G.729, G.722}. Dans cette offre retouchée, tous les codecs nécessaires au domaine B sont présents, mais placés selon des priorités différentes de celles associées au premier mode de réalisation puisque le codec G.722 est cette fois relégué en dernière position.

Lors d'une étape S'4, le dispositif de transit E envoie l'offre retouchée Ob au terminal Tb.

Lors d'une étape S'5, le terminal Tb détermine une réponse Rb en sélectionnant, dans l'offre retouchée Ob, le ou les codec(s) qu'il accepte. Dans le présent mode de réalisation, où l'offre retouchée est

$$Ob = \{AMR\text{-}WB, G.711, G.729, G.722\},$$

et dans le cas où la réponse Rb peut contenir plusieurs codecs, le terminal Tb produit, selon son type, la réponse suivante :

- premier type : Rb = {G.722},
- deuxième type : Rb = {G.711},
- troisième type : Rb = {G.711, G.722},
- quatrième type : Rb = {G.729, G.722},
- cinquième type : Rb = {AMR-WB, G.729}, et
- sixième type : Rb = {G.729}.

Le terminal Tb envoie ensuite la réponse Rb au dispositif de transit E.

Lors d'une étape S'6, le dispositif de transit E utilise à nouveau la liste $PL^3$ pour obtenir la réponse retouchée provisoire R'a.

Pour ce faire, le dispositif de transit E parcourt la réponse Rb, et couple chaque codec compris dans la réponse Rb avec un codec compris dans l'offre Oa, et ce, de manière à maximiser le degré de priorité.

Ainsi, selon le type du terminal Tb, le dispositif de transit E obtient :

- premier type : Rb = {G.722}, R'a = {AMR-WB} (priorité maximale 2),
- deuxième type : Rb = {G.711}, R'a = {G.711} (priorité maximale 4),
- troisième type: Rb = {G.711, G.722}, R'a = {G711, AMR-WB} (priorités maximales 4 et 2),
- quatrième type: Rb = {G729, G.722}, R'a = {G.711, AMR-WB} (priorités maximales 3 et 2),
- cinquième type : Rb = {AMR-WB, G.729}, R'a = {AMR-WB, G.711} (priorités maximales 5 et 3), et
- sixième type : Rb = {G.729}, R'a = {G.711} (priorité maximale 3).

Enfin, lors d'une étape S'7, le dispositif de transit E obtient la réponse retouchée Ra à partir, au moins, de la réponse retouchée provisoire R'a, et envoie cette réponse retouchée Ra au terminal Ta.

Par exemple, selon une première variante, Ra est simplement identique à R'a. Dans cette première variante, le dispositif de transit E obtient, selon le type du terminal Tb :

- premier type : Rb = {G.722}, R'a = {AMR-WB},
- deuxième type : Rb = {G.711}, R'a = {G.711},
- troisième type : Rb = {G.711, G.722}, R'a = {G711, AMR-WB},
- quatrième type : Rb = {G729, G.722}, R'a = {G.711, AMR-WB},
- cinquième type : Rb = {AMR-WB, G.729}, R'a = {AMR-WB, G.711}, et
- sixième type : Rb = {G.729}, R'a = {G.711}.

Selon une deuxième variante, on filtre R'a de manière à ne garder que son premier codec. Dans cette deuxième variante, le dispositif de transit E obtient, selon le type du terminal Tb :

- premier type : Rb = {G.722}, R'a = {AMR-WB},
- deuxième type : Rb = {G.711}, R'a = {G.711},
- troisième type : Rb = {G.711, ...}, R'a = {G711},
- quatrième type : Rb = {G729, ...}, R'a = {G.711},
- cinquième type : Rb = {AMR-WB, ...}, R'a = {AMR-WB}, et
- sixième type : Rb = {G.729}, R'a = {G.711}.

D'autres variantes sont naturellement possibles.
On rappelle que l'offre initiale de Ta était Oa = {AMR-WB, G.711}. On voit dans l'exemple ci-dessus que, pour un terminal Tb du sixième type, le transcodage G .711-G.729, soit BD-BD, est favorisé par rapport à un transcodage AMR-WB-G.729, soit HD-BD, selon l'art antérieur.
L'invention peut être mise en œuvre au sein des nœuds, par exemple des dispositifs de transit, de réseaux de communication, au moyen de composants logiciels et/ou matériels.
Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de négociation de codecs selon l'invention.
En effet, l'invention vise aussi un programme d'ordinateur téléchargeable depuis un réseau de communication comprenant des instructions pour l'exécution des étapes d'un procédé de négociation de codecs selon l'invention, lorsqu'il est exécuté sur un ordinateur. Ce programme d'ordinateur peut être stocké sur un support lisible par ordinateur et peut être exécutable par un microprocesseur.
Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.
L'invention vise aussi un support d'informations, inamovible, ou partiellement ou totalement amovible, lisible par un ordinateur, et comportant des instructions d'un programme d'ordinateur tel que mentionné ci-dessus.
Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique tel qu'un disque dur, ou encore une clé USB (« *USB flash drive* » en anglais).
D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.
En variante, le support d'informations peut être un circuit intégré dans lequel le programme est incorporé, le circuit étant adapté pour exécuter ou pour être utilisé dans l'exécution de l'un quelconque des procédés de négociation de codecs selon l'invention.

**Revendications**

1. Procédé de négociation de codecs, comprenant les étapes suivantes :

    1) un terminal (Ta), dit premier terminal, appartenant à un premier domaine/réseau IP (A), émet (S1, S'1) au moins un message spécifiant, pour un type de flux média donné, une liste de codecs, dite offre Oa, que ledit premier terminal (Ta) est capable d'utiliser pour communiquer avec un autre terminal (Tb), dit second terminal, appartenant à un second domaine/réseau IP (B),

2) ledit message est intercepté (S2, S'2) par un dispositif de transit (E) situé sur le chemin de signalisation entre lesdits premier (A) et second (B) domaines/réseaux,
3) le dispositif de transit (E) détermine (S3, S'3) une liste de codecs, dite offre retouchée Ob, à partir, au moins, de ladite offre Oa,
4) le dispositif de transit (E) envoie (S4, S'4) ladite offre retouchée Ob audit second terminal (Tb),
5) le second terminal (Tb) détermine (S5, S'5) une liste de codecs, dite réponse

$$Rb = \{Cb(1), Cb(2), ..., Cb(n)\},$$

comprenant $n \geq 1$ codecs qui sont, d'une part, compris dans l'offre retouchée Ob, et d'autre part tels que le second terminal (Tb) est capable de les utiliser, et envoie ladite réponse Rb au dispositif de transit (E), et
6) le dispositif de transit (E) détermine (S6, S'6), à partir de ladite réponse Rb, une liste de codecs, dite réponse retouchée provisoire R'a, ledit procédé étant **caractérisé en ce qu'**il comprend une étape préalable au cours de laquelle est configurée une liste de priorité (PL) comprenant des triplets constitué chacun de :

• un codec Ca utilisable par un terminal du premier domaine/réseau (A),
• un codec Cb utilisable par un terminal du second domaine/réseau (B), et
• un degré de priorité associé à ce couple de codecs (Ca, Cb), et **en ce que** ladite réponse retouchée provisoire est

$$R'a = \{Ca(1), Ca(2), ..., Ca(n)\},$$

où le codec Ca($i$), où $i$ = 1,2, ... , $n$, est un codec offrant, en association avec le codec Cb(i) de la réponse Rb, le degré de priorité maximal parmi les codecs de l'offre Oa.

2. Procédé de négociation de codecs selon la revendication 1, **caractérisé en ce qu'**il comprend en outre une étape (S7, S'7) au cours de laquelle le dispositif de transit (E) envoie audit premier terminal (Ta) une liste de codecs, dite réponse retouchée Ra, comprenant au moins ladite réponse retouchée provisoire R'a, ou le premier codec de ladite réponse retouchée provisoire R'a.

3. Procédé de négociation de codecs selon la revendication 1 ou la revendication 2, **caractérisé en ce que**, lors de ladite étape 3), le dispositif de transit (E) met en œuvre les sous-étapes suivantes :

a) détermination, pour chaque codec Ca de l'offre Oa, du, ou des, codec(s) Cb utilisable(s) par un terminal du second domaine/réseau (B), et détermination du degré de priorité associé au(x) couple(s) formé(s) par ce codec Ca de l'offre Oa et ce, ou ces, codec(s) Cb utilisable(s) par un terminal du second domaine/réseau (B),
b) détermination, pour chacun des codecs Cb déterminés lors de la sous-étape a), du degré de priorité maximal parmi les degrés de priorité associés déterminés lors de cette sous-étape a), et sélection de ce degré de priorité maximal en association avec ce codec Cb, et
c) formation d'une offre retouchée Ob comprenant les codecs Cb déterminés lors de la sous-étape a), par valeurs décroissantes du degré de priorité associé sélectionné lors de la sous-étape b).

4. Procédé de négociation de codecs selon l'une quelconque des revendications 1 à 3, **caractérisé en ce que** lesdits degrés de priorité forment une échelle favorisant les communications à Haute Définition par rapport aux communications à Basse Définition.

5. Procédé de négociation de codecs selon l'une quelconque des revendications 1 à 4, **caractérisé en ce que** ladite liste de priorité (LP) est sélectionnée par ledit dispositif de transit (E) parmi une pluralité de listes respectives (LP$^c$) correspondant chacune à un palier c respectif de charge courante du dispositif de transit (E).

6. Dispositif de transit situé sur le chemin de signalisation entre un premier domaine/réseau IP (A) et un second domaine/réseau IP (B), **caractérisé en ce qu'**il comprend des moyens pour :

- intercepter un message émis par un terminal (Ta), dit premier terminal, appartenant audit premier domaine/réseau (A), ledit message spécifiant, pour un type de flux média donné, une liste de codecs, dite offre Oa, que ledit premier terminal (Ta) propose d'utiliser pour communiquer avec un terminal, dit second terminal (Tb), appartenant audit second domaine/réseau (B),
- déterminer une liste de codecs, dite offre retouchée Ob, à partir, au moins, de ladite offre Oa, et envoyer ladite offre retouchée Ob audit second terminal (Tb),
- recevoir de la part du second terminal (Tb) une liste de codecs, dite réponse

$$Rb = \{Cb(1), Cb(2), ..., Cb(n)\},$$

et
- déterminer, à partir de ladite réponse Rb, une liste de codecs, dite réponse retouchée provisoire R'a,

et **en ce qu'**il comprend en outre des moyens pour :

- prendre en compte une liste de priorité (PL) comprenant des triplets constitué chacun de :

  • un codec Ca utilisable par un terminal du premier domaine/réseau (A),
  • un codec Cb utilisable par un terminal du second domaine/réseau (B), et
  • un degré de priorité associé à ce couple de codecs (Ca, Cb), et **en ce que** ladite réponse retouchée provisoire est

$$R'a = \{Ca(1), Ca(2), ..., Ca(n)\},$$

où le codec Ca($i$), où $i$ = 1,2, ... , $n$, est un codec offrant, en association avec le codec Cb(i) de la réponse Rb, le degré de priorité maximal parmi les codecs de l'offre Oa.

7. Dispositif de transit selon la revendication 6, **caractérisé en ce qu'**il comprend en outre des moyens pour envoyer audit premier terminal (Ta) une liste de codecs, dite réponse retouchée Ra, comprenant au moins ladite réponse retouchée provisoire R'a, ou le premier codec de ladite réponse retouchée provisoire R'a.

8. Dispositif de transit selon la revendication 6 ou la revendication 7, **caractérisé en ce qu'**il comprend en outre des moyens pour :

   - déterminer, pour chaque codec Ca de l'offre Oa, le, ou les, codec(s) Cb utilisable(s) par un terminal du second domaine/réseau (B), et déterminer le degré de priorité associé au(x) couple(s) formé(s) par ce codec Ca de l'offre Oa et ce, ou ces, codec(s) Cb utilisable(s) par un terminal du second domaine/réseau (B),
   - déterminer, pour chacun des codecs Cb ainsi déterminés, le degré de priorité maximal parmi les degrés de priorité associés ainsi déterminés, et sélectionner ce degré de priorité maximal en association avec ce codec Cb, et
   - former une offre retouchée Ob comprenant les codecs Cb ainsi déterminés, par valeurs décroissantes du degré de priorité associé ainsi sélectionné.

9. Dispositif de transit selon l'une quelconque des revendications 6 à 8, **caractérisé en ce que** lesdits degrés de priorité forment une échelle favorisant les communications à Haute Définition par rapport aux communications à Basse Définition.

10. Dispositif de transit selon l'une quelconque des revendications 6 à 9, **caractérisé en ce que**, ladite liste de priorité (LP) comprenant une pluralité de listes respectives (LP$^c$) correspondant chacune à un palier $c$ respectif de charge courante dudit dispositif de transit (E), il possède en outre des moyens pour :

    - obtenir sa propre charge, et
    - déterminer au sein de quel intervalle cette charge se situe, parmi une série d'intervalles respectifs I$^c$ correspondant chacun à un palier de charge respectif c.

11. Moyen de stockage de données inamovible, ou partiellement ou totalement amovible, comportant des instructions de code de programme informatique pour l'exécution des étapes d'un procédé de sélection de codecs selon l'une quelconque des revendications 1 à 5.

**12.** Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de sélection de codecs selon l'une quelconque des revendications 1 à 5, lorsqu'il est exécuté sur un ordinateur.

**Patentansprüche**

**1.** Verfahren zur Aushandlung von Codecs, umfassend die folgenden Schritte:

1) ein Endgerät (Ta), das erste Endgerät, das zu einer ersten Domain / einem ersten IP-Netzwerk (A) gehört, sendet (S1, S'1) mindestens eine Nachricht, die für eine bestimmte Art von Medienstrom eine Liste mit Codecs, das Oa-Angebot, angibt, die das erste Endgerät (Ta) nutzen kann, um mit einem anderen Endgerät (Tb), dem zweiten Endgerät, zu kommunizieren, das zu einer zweiten Domain / einem zweiten IP-Netzwerk (B) gehört,
2) die Nachricht wird durch eine Transitvorrichtung (E) abgefangen (S2, S'2), die sich auf dem Signalisierungsweg zwischen der/dem ersten (A) und der/dem zweiten (B) Domain/Netzwerk befindet,
3) die Transitvorrichtung (E) bestimmt (S3, S'3) eine Liste mit Codecs, das überarbeitete Angebot Ob, anhand zumindest des Angebots Oa,
4) die Transitvorrichtung (E) sendet (S4, S'4) das überarbeitete Angebot Ob an das zweite Endgerät (Tb),
5) das zweite Endgerät (Tb) bestimmt (S5, S'5) eine Liste mit Codecs, die Antwort

$$Rb = \{Cb(1), Cb(2), ..., Cb(n)\},$$

umfassend $n \geq 1$ Codecs, die einerseits in dem überarbeiteten Angebot Ob enthalten, und andererseits so, wie das zweite Endgerät (Tb) sie zu nutzen vermag, sind, und sendet die Antwort Rb an die Transitvorrichtung (E), und
6) die Transitvorrichtung (E) bestimmt (S6, S'6) anhand der Antwort Rb eine Liste mit Codecs, die provisorische überarbeitete Antwort R'a, wobei das Verfahren **dadurch gekennzeichnet ist, dass** es einen vorhergehenden Schritt umfasst, bei dem eine Prioritätsliste (PL) konfiguriert wird, die Tripel umfasst, die jeweils von Folgendem gebildet sind:

• einem Codec Ca, der von einem Endgerät der ersten Domain / des ersten Netzwerks (A) nutzbar ist,
• einem Codec Cb, der von einem Endgerät der zweiten Domain / des zweiten Netzwerks (B) nutzbar ist, und
• einem Prioritätsgrad, der mit diesem Paar von Codecs (Ca, Cb) in Verbindung steht, und dadurch, dass die provisorische überarbeitete Antwort

$$R'a = \{Ca(1), Ca(2), ..., Ca(n)\}$$

ist,
wobei der Codec Ca(i), wobei i = 1,2, ..., n, ein Codec ist, der in Verbindung mit dem Codec Cb(i) der Antwort Rb den maximalen Prioritätsgrad von den Codecs des Angebots Oa bietet.

**2.** Verfahren zur Aushandlung von Codecs nach Anspruch 1, **dadurch gekennzeichnet, dass** es ferner einen Schritt (S7, S'7) umfasst, bei dem die Transitvorrichtung (E) eine Liste mit Codecs, die überarbeitete Antwort Ra, an das erste Endgerät (Ta) sendet, umfassend zumindest die provisorische überarbeitete Antwort R'a oder den ersten Codec der provisorischen überarbeiteten Antwort R'a.

**3.** Verfahren zur Aushandlung von Codecs nach Anspruch 1 oder 2, **dadurch gekennzeichnet, dass** bei Schritt 3) die Transitvorrichtung (E) die folgenden Unterschritte durchführt:

a) Bestimmen, für jeden Codec Ca des Angebots Oa, des oder der Codec(s) Cb, der/die von einem Endgerät der zweiten Domain / des zweiten Netzwerks (B) nutzbar ist bzw. sind, und Bestimmen des Prioritätsgrads, der mit dem/den Paar(en) in Verbindung steht, die durch diesen Codec Ca des Angebots Oa und diesem oder diesen Codec(s) Cb gebildet ist bzw. sind, der/die von einem Endgerät der zweiten Domain / des zweiten Netzwerks (B) nutzbar ist bzw. sind,

b) Bestimmen, für jeden der Codecs Cb, die beim Unterschritt a) bestimmt wurden, des maximalen Prioritätsgrads von den zugehörigen Prioritätsgraden, die bei diesem Unterschritt a) bestimmt wurden, und Auswählen dieses maximalen Prioritätsgrads in Verbindung mit diesem Codec Cb, und

c) Bilden eines überarbeiteten Angebots Ob umfassend die Codecs Cb, die beim Unterschritt a) bestimmt wurden, mit abnehmenden Werten des zugehörigen Prioritätsgrads, der beim Unterschritt b) ausgewählt wurde.

4. Verfahren zur Aushandlung von Codecs nach einem der Ansprüche 1 bis 3, **dadurch gekennzeichnet, dass** die Prioritätsgrade eine Skala bilden, welche die Kommunikationen mit hoher Auflösung im Verhältnis zu den Kommunikationen mit niedriger Auflösung begünstigt.

5. Verfahren zur Aushandlung von Codecs nach einem der Ansprüche 1 bis 4, **dadurch gekennzeichnet, dass** die Prioritätsliste (LP) von der Transitvorrichtung (E) aus einer Mehrzahl von jeweiligen Listen (LP$^c$) ausgewählt wird, die jeweils einer jeweiligen Stufe c einer aktuellen Last der Transitvorrichtung (E) entspricht.

6. Transitvorrichtung, die sich auf dem Signalisierungsweg zwischen einer ersten Domain / einem ersten IP-Netzwerk (A) und einer zweiten Domain / einem zweiten IP-Netzwerk (B) befindet, **dadurch gekennzeichnet, dass** sie Mittel umfasst, um:

- eine Nachricht abzufangen, die von einem Endgerät (Ta), dem ersten Endgerät, gesendet wird, das zur ersten Domain / zum ersten Netzwerk (A) gehört, wobei die Nachricht für eine bestimmte Art von Medienstrom eine Liste mit Codecs angibt, das Oa-Angebot, die das erste Endgerät (Ta) zu nutzen vorschlägt, um mit einem Endgerät, dem zweiten Endgerät (Tb), zu kommunizieren, das zur zweiten Domain / zum zweiten IP-Netzwerk (B) gehört,

- eine Liste mit Codecs, das überarbeitete Angebot Ob, anhand zumindest des Angebots Oa zu bestimmen und das überarbeitete Angebot Ob an das zweite Endgerät (Tb) zu senden,

- von dem zweiten Endgerät (Tb) eine Liste mit Codecs, die Antwort

$$Rb = \{Cb(1), Cb(2), ..., Cb(n)\}$$

zu empfangen, und

- anhand der Antwort Rb eine Liste mit Codecs, die provisorische überarbeitete Antwort R'a, zu bestimmen, und dadurch, dass sie ferner Mittel umfasst, um:

- eine Prioritätsliste (PL) zu berücksichtigen, die Tripel umfasst, die jeweils von Folgendem gebildet sind:

 • einem Codec Ca, der von einem Endgerät der ersten Domain / des ersten Netzwerks (A) nutzbar ist,

 • einem Codec Cb, der von einem Endgerät der zweiten Domain / des zweiten Netzwerks (B) nutzbar ist, und

 • einem Prioritätsgrad, der mit diesem Paar von Codecs (Ca, Cb) in Verbindung steht, und dadurch, dass die provisorische überarbeitete Antwort

$$R'a = \{Ca(1), Ca(2), ..., Ca(n)\}$$

ist,

wobei der Codec Ca(i), wobei i = 1,2, ..., n, ein Codec ist, der in Verbindung mit dem Codec Cb(i) der Antwort Rb den maximalen Prioritätsgrad von den Codecs des Angebots Oa bietet.

7. Transitvorrichtung nach Anspruch 6, **dadurch gekennzeichnet, dass** sie ferner Mittel umfasst, um an das erste Endgerät (Ta) eine Liste mit Codecs, die überarbeitete Antwort Ra, zu senden, umfassend zumindest die provisorische überarbeitete Antwort R'a oder den ersten Codec der provisorischen überarbeiteten Antwort R'a.

8. Transitvorrichtung nach Anspruch 6 oder 7, **dadurch gekennzeichnet, dass** sie ferner Mittel umfasst, um:

- für jeden Codec Ca des Angebots Oa, den oder die Codec(s) Cb, der/die von einem Endgerät der zweiten Domain / des zweiten Netzwerks (B) nutzbar ist bzw. sind, zu bestimmen, und den Prioritätsgrad zu bestimmen, der mit dem/den Paar(en) in Verbindung steht, die durch diesen Codec Ca des Angebots Oa und diesem oder diesen Codec(s) Cb gebildet ist bzw. sind, der/die von einem Endgerät der zweiten Domain / des zweiten Netzwerks (B) nutzbar ist bzw. sind,

- für jeden der Codecs Cb, die so bestimmt wurden, den maximalen Prioritätsgrad von den zugehörigen Prioritätsgraden, die so bestimmt wurden, zu bestimmen, und diesen maximalen Prioritätsgrad in Verbindung mit diesem Codec Cb auszuwählen, und
- ein überarbeitetes Angebot Ob, umfassend die Codecs Cb, die so bestimmt wurden, mit abnehmenden Werten des zugehörigen Prioritätsgrads, der so ausgewählt wurde, zu bilden.

9. Transitvorrichtung nach einem der Ansprüche 6 bis 8, **dadurch gekennzeichnet, dass** die Prioritätsgrade eine Skala bilden, welche die Kommunikationen mit hoher Auflösung im Verhältnis zu den Kommunikationen mit niedriger Auflösung begünstigt.

10. Transitvorrichtung nach einem der Ansprüche 6 bis 9, **dadurch gekennzeichnet, dass**, die Prioritätsliste (LP) umfassend eine Mehrzahl von jeweiligen Listen (LP$^c$), die jeweils einer jeweiligen Stufe c einer aktuellen Last der Transitvorrichtung (E) entsprechen, sie ferner Mittel umfasst, um:

- ihre eigene Last zu erhalten, und
- zu bestimmen, in welchem Intervall aus einer Reihe jeweiliger Intervalle I$^c$, die jeweils einer jeweiligen Laststufe c entsprechen, sich diese Last befindet.

11. Datenspeichermittel, das nicht entfernbar, teilweise entfernbar oder vollständig entfernbar ist, aufweisend Computerprogrammcode-Anweisungen zur Ausführung der Schritte eines Verfahrens zur Auswahl von Codecs nach einem der Ansprüche 1 bis 5.

12. Computerprogramm, das aus einem Kommunikationsnetzwerk herunterladbar ist und/oder auf einem computerlesbaren Datenträger gespeichert ist und/oder von einem Mikroprozessor ausführbar ist, **dadurch gekennzeichnet, dass** es Anweisungen zur Ausführung der Schritte eines Verfahrens zur Auswahl von Codecs nach einem der Ansprüche 1 bis 5 umfasst, wenn es auf einem Computer ausgeführt wird.

## Claims

1. Codec negotiation method, comprising the following steps:

1) a terminal (Ta), called first terminal, belonging to a first IP domain/network (A), transmits (S1, S'1) at least one message specifying, for a given type of media stream, a list of codecs, called offer Oa, that said first terminal (Ta) is capable of using to communicate with another terminal (Tb), called second terminal, belonging to a second IP domain/network (B),

2) said message is intercepted (S2, S'2) by a transit device (E) situated on the signalling path between said first (A) and second (B) domains/networks,

3) the transit device (E) determines (S3, S'3) a list of codecs, called adjusted offer Ob, based at least on said offer Oa,

4) the transit device (E) sends (S4, S'4) said adjusted offer Ob to said second terminal (Tb),

5) the second terminal (Tb) determines (S5, S'5) a list of codecs, called response Rb = {Cb(1), Cb(2), ..., Cb($n$)}, comprising $n \geq 1$ codecs that are firstly contained in the adjusted offer Ob and secondly such that the second terminal (Tb) is capable of using them, and sends said response Rb to the transit device (E), and

6) the transit device (E) determines (S6, S'6), based on said response Rb, a list of codecs, called provisional adjusted response R'a,

said method being **characterized in that** it comprises a preliminary step during which a priority list (PL) is configured, comprising triplets each formed of:

- a codec Ca able to be used by a terminal of the first domain/network (A),
- a codec Cb able to be used by a terminal of the second domain/network (B), and
- a priority degree associated with this pair of codecs (Ca, Cb),

and **in that** said provisional adjusted response is R'a = {Ca(1), Ca(2), ..., Ca($n$)}, where the codec Ca($i$), where i = 1,2,...,$n$, is a codec offering, in association with the codec Cb($i$) of the response Rb, the maximum priority degree from among the codecs of the offer Oa.

**2.** Codec negotiation method according to Claim 1, **characterized in that** it furthermore comprises a step (S7, S'7) during which the transit device (E) sends said first terminal (Ta) a list of codecs, called adjusted response Ra, comprising at least said provisional adjusted response R'a, or the first codec of said provisional adjusted response R'a.

**3.** Codec negotiation method according to Claim 1 or Claim 2, **characterized in that**, in step 3), the transit device (E) implements the following sub-steps:

a) determining, for each codec Ca of the offer Oa, the codec or codecs Cb able to be used by a terminal of the second domain/network (B), and determining the priority degree associated with the pair or pairs formed by this codec Ca of the offer Oa and this codec or these codecs Cb able to be used by a terminal of the second domain/network (B),
b) determining, for each of the codecs Cb determined in sub-step a), the maximum priority degree from among the associated priority degrees determined in this sub-step a), and selecting this maximum priority degree in association with this codec Cb, and
c) forming an adjusted offer Ob comprising the codecs Cb determined in sub-step a), through decreasing values of the associated priority degree selected in sub-step b).

**4.** Codec negotiation method according to any one of Claims 1 to 3, **characterized in that** said priority degrees form a scale giving preference to high-definition communications over low-definition communications.

**5.** Codec negotiation method according to any one of Claims 1 to 4, **characterized in that** said priority list (LP) is selected by said transit device (E) from among a plurality of respective lists (LP$^c$) each corresponding to a respective current load level c of the transit device (E).

**6.** Transit device situated on the signalling path between a first IP domain/network (A) and a second IP domain/network (B), **characterized in that** it comprises means for:

- intercepting a message transmitted by a terminal (Ta), called first terminal, belonging to said first domain/network (A), said message specifying, for a given type of media stream, a list of codecs, called offer Oa, that said first terminal (Ta) proposes to use to communicate with a terminal, called second terminal (Tb), belonging to said second domain/network (B),
- determining a list of codecs, called adjusted offer Ob, based at least on said offer Oa, and sending said adjusted offer Ob to said second terminal (Tb),
- receiving, from the second terminal (Tb), a list of codecs, called response Rb = {Cb(1), Cb(2), ..., Cb(n)}, and
- determining, from said response Rb, a list of codecs, called provisional adjusted response R'a, and **in that** it furthermore comprises means for:
- taking into account a priority list (PL) comprising triplets each formed of:

• a codec Ca able to be used by a terminal of the first domain/network (A),
• a codec Cb able to be used by a terminal of the second domain/network (B), and
• a priority degree associated with this pair of codecs (Ca, Cb),

and **in that** said provisional adjusted response is R'a = {Ca(1), Ca(2), ..., Ca(n)}, where the codec Ca(i), where i = 1,2,...,n, is a codec offering, in association with the codec Cb(i) of the response Rb, the maximum priority degree from among the codecs of the offer Oa.

**7.** Transit device according to Claim 6, **characterized in that** it furthermore comprises means for sending said first terminal (Ta) a list of codecs, called adjusted response Ra, comprising at least said provisional adjusted response R'a, or the first codec of said provisional adjusted response R'a.

**8.** Transit device according to Claim 6 or Claim 7, **characterized in that** it furthermore comprises means for:

- determining, for each codec Ca of the offer Oa, the codec or codecs Cb able to be used by a terminal of the second domain/network (B), and determining the priority degree associated with the pair or pairs formed by this codec Ca of the offer Oa and this codec or these codecs Cb able to be used by a terminal of the second domain/network (B),

- determining, for each of the codecs Cb thus determined, the maximum priority degree from among the associated priority degrees thus determined, and selecting this maximum priority degree in association with this codec Cb, and
- forming an adjusted offer Ob comprising the codecs Cb thus determined, through decreasing values of the associated priority degree thus selected.

**9.** Transit device according to any one of Claims 6 to 8, **characterized in that** said priority degrees form a scale giving preference to high-definition communications over low-definition communications.

**10.** Transit device according to any one of Claims 6 to 9, **characterized in that**, said priority list (LP) comprising a plurality of respective lists ($LP^c$) each corresponding to a respective current load level c of said transit device (E), it furthermore has means for:

- obtaining its own load, and
- determining the interval within which this load is situated, from among a series of respective intervals $I^c$ each corresponding to a respective load level *c*.

**11.** Non-removable or partly or fully removable data storage means including computer program code instructions for executing the steps of a codec selection method according to any one of Claims 1 to 5.

**12.** Computer program downloadable from a communication network and/or stored on a computer-readable medium and/or able to be executed by a microprocessor, **characterized in that** it comprises instructions for executing the steps of a codec selection method according to any one of Claims 1 to 5 when it is executed on a computer.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007035572 A2

- WO 2008083470 A1

**Littérature non-brevet citée dans la description**

- RFC 3986. Internet Engineering Task Force
- Session Initiation Protocol » signifiant « Protocole d'Initialisation de Session ». *RFC 3261*

- Session Description Protocol » signifiant « Protocole de Description de Session. *RFC 4566 de l'IETF*
- *RFC 3264 de l'IETF*
- *RFC 3264*